# EUROPÄISCHE PATENTSCHRIFT

(11) **EP 2 396 531 B1**
(45) Veröffentlichungstag und Bekanntmachung des Hinweises auf die Patenterteilung: **28.12.2016**
(21) Anmeldenummer: 10700826.0
(22) Anmeldetag: 05.01.2010
(51) Int. Cl.: F02D 41/22, G01M 15/02

(54) **VERFAHREN UND VORRICHTUNG ZUR AUFNAHME UND ÜBERTRAGUNG VON BETRIEBSDATEN EINER BRENNKRAFTMASCHINE**
METHOD AND DEVICE FOR RECEIVING AND TRANSMITTING OPERATING DATA OF AN INTERNAL COMBUSTION ENGINE
PROCÉDÉ ET DISPOSITIF DE RELEVÉ ET DE TRANSFERT DE DONNÉES DE FONCTIONNEMENT D'UN MOTEUR À COMBUSTION INTERNE

(30) Priorität: 16.02.2009 DE 102009000871
(43) Veröffentlichungstag der Anmeldung: 21.12.2011
(73) Patentinhaber: Robert Bosch GmbH, 70442 Stuttgart (DE)
(72) Erfinder: ZEIDLER, Johannes, 71522 Backnang (DE)
(86) Internationale Anmeldenummer: PCT/EP2010/050031
(87) Internationale Veröffentlichungsnummer: WO 2010/091903

(56) Entgegenhaltungen:
- WO-A1-2006/105930
- DE-A1- 3 020 890
- US-A1- 2008 082 228
- US-B1- 6 601 015

## Beschreibung

Die Erfindung betrifft ein Verfahren zur Aufnahme von Betriebsdaten einer Brennkraftmaschine in einem Steuergerät während einer Diagnosefunktion des Steuergeräts und zur Übertragung der Betriebsdaten von dem Steuergerät an ein Diagnosegerät, wobei die Betriebsdaten in dem Steuergerät mit Hilfe von der Brennkraftmaschine zugeordneten Sensoren und/oder aus von Ausgangssignalen der Sensoren abgeleiteten Größen und/oder aus Steuergeräte-internen Größen bestimmt werden.

Die Erfindung betrifft weiterhin eine Vorrichtung zur Aufnahme von Betriebsdaten einer Brennkraftmaschine in einem zur Steuerung der Brennkraftmaschine vorgesehenen Steuergerät während einer Diagnosefunktion des Steuergeräts und zur Übertragung der Betriebsdaten von dem Steuergerät an ein mit dem Steuergerät verbundenes Diagnosegerät, wobei dem Steuergerät Sensoren zur Aufnahme der Betriebsdaten zugeordnet sind und/oder in dem Steuergerät Funktionen vorgesehen sind, die zur Ableitung von Betriebsdaten aus den Ausgangssignalen der Sensoren vorgesehen sind und wobei in dem Steuergerät eine Diagnosefunktion vorgesehen ist.

### Stand der Technik

Steuergeräte für Brennkraftmaschinen nehmen Signale von Sensoren wie Lambdasonden, Temperaturfühlern, einem Luftmassenmesser, Drehwinkelsensoren, Zylinderdrucksensoren, Klopfsensoren und Fahrerwunschsensoren auf, verarbeiten diese und steuern Stellgeräte an der Brennkraftmaschine wie Kraftstoffdosiereinrichtungen, elektrische Zündeinrichtungen und eine ZuluftDosiereinrichtung. Ziel ist es, eine Leistung der Brennkraftmaschine gemäß dem Fahrerwunsch bereit zu stellen. Aufgabe des Steuergeräts ist es aber weiterhin, eine korrekte Funktion der Brennkraftmaschine hinsichtlich schadstoffarmer Verbrennung zu erreichen und bei Bedarf Diagnosedaten bereit zu stellen, die eine Kontrolle der Funktion der Brennkraftmaschine erlauben. Die Funktionen des Steuergeräts können als elektronischer Schaltkreis oder als Programmablauf oder als Kombination von beidem verwirklicht sein.

Zur Kontrolle der Funktion einer Brennkraftmaschine ist es üblich, die Steuerung über eine standardisierte Schnittstelle mit einem externen Prüfgerät, einem so genannten Diagnosetester oder Diagnosegerät, zu verbinden, über das Daten an das Steuergerät gesendet werden können um gezielt Betriebszustände der Brennkraftmaschine einzustellen und über das Daten aus dem Steuergerät ausgelesen, verarbeitet und dargestellt werden können. Hierdurch kann bei einem Werkstattaufenthalt eine umfassende Prüfung der Funktionen der Brennkraftmaschine, des Steuergeräts, der angeschlossenen Sensoren sowie der Stellgeräte durchgeführt werden.

Bei einer solchen Überprüfung sendet das externe Prüfgerät eine Anfrage nach einem bestimmten Wertetyp an das Steuergerät, das hierauf den Istwert des Wertetyps zurücksendet. Beispielhaft kann so der Ist-Wert des Signals einer Lambdasonde abgefragt werden. Werden mehrere zeitlich aufeinander folgende Werte benötigt, wird für jeden zu übertragenden Wert eine Anfrage des externen Prüfgeräts gesendet. Aus dem beschriebenen Verfahren folgt eine MindestZyklusdauer, die durch den Datenaustausch zwischen dem Prüfgerät und dem Steuergerät mit bestimmt wird und die maximale Frequenz der Abfragen begrenzt. Weiterhin ist die Zyklusdauer nicht notwendigerweise konstant, so dass periodische Abfragen, beispielhaft mit der Drehzahl der Brennkraftmaschine gekoppelte Abfragen, erschwert werden.

Aus der US 6,601,015 B1 ist ein Verfahren bekannt, bei dem eine Brennkraftmaschine mit einer Anzahl sich zyklisch bewegender Kolben zum Antrieb eines Landfahrzeugs und ein Steuergerät mit Datenspeicher für die Brennkraftmaschine beschrieben werden, wobei die Steuerung die Brennkraftmaschine durch periodische Überwachung einer Anzahl von Leistungsparametern steuert, wobei ein erstes Startereignis festgelegt wird, bei welchem eine erste Anzahl von Werten mit einer ersten vorgegebenen Frequenz in dem Speicher abgelegt werden, die zumindest einen Teil der Leistungsparametern der Brennkraftmaschine repräsentieren und wobei ein zweites Startereignis festgelegt wird, bei welchem eine zweite Anzahl von Werten mit einer zweiten vorgegebenen Frequenz in dem Speicher abgelegt werden, wobei die Werte zumindest einen Teil der Leistungsparametern der Brennkraftmaschine repräsentieren und wobei die erste vorgegebene Frequenz von dem ersten Startereignis festlegbar ist, die zweite vorgegebene Frequenz von dem zweiten Startereignis festlegbar ist und wobei die erste und die zweite Frequenz unterschiedlich vorgegeben werden können.

Es ist Aufgabe der Erfindung, ein Verfahren bereitzustellen, welches es erlaubt, während einer Diagnosephase in einem vorgegebenen Zeitraster mit hoher Abtastrate und/oder synchron zu der Drehzahl einer Brennkraftmaschine für den Betriebszustand der Brennkraftmaschine kennzeichnende Werte aufzunehmen und diese Werte an ein Diagnosegerät zu übertragen. Es ist weiterhin Aufgabe der Erfindung, eine Vorrichtung zur Durchführung des Verfahrens bereitzustellen.

### Offenbarung der Erfindung

Die das Verfahren betreffende Aufgabe der Erfindung wird dadurch gelöst, dass von dem Diagnosegerät an die Diagnosefunktion eine Angabe eines Betriebsdaten -Typs und einer zeitlichen Auflösung der Werteaufnahme übertragen wird, dass in dem Steuergerät mittels der Diagnosefunktion die Betriebsdaten erfasst werden, dass die Werteaufnahme von dem Diagnosegerät gestartet wird, dass die Betriebsdaten in einem Pufferspeicher in dem Steuergerät gespeichert werden und dass die Betriebsdaten aus dem Pufferspeicher an das Diagnosegerät übertragen werden.

Zur Bestimmung von Betriebsdaten einer Brennkraftmaschine unter verschiedenen Betriebszuständen ist es üblich, das Steuergerät der Brennkraftmaschine mit einem externen Diagnosegerät zu verbinden, das einerseits die Parameter der Betriebszustände an das Steuergerät übertragen kann und andererseits Betriebsdaten der Brennkraftmaschine aus dem Steuergerät auslesen kann. Die Verbindung von Diagnosegerät und Steuergerät erfolgt über standardisierte Schnittstellen, deren Übertragungsgeschwindigkeit aus Kostengründen und Gründen der Störungssicherheit begrenzt ist. Durch die erfindungsgemäße Auslegung der Diagnosefunktion in dem Steuergerät, die als Schaltkreis und/oder Programmablauf ausgebildet sein kann, dass nicht jeder Betriebsdatenwert einzeln von dem Diagnosegerät abgerufen wird, sondern eine Reihe von Betriebsdatenwerten in einem Pufferspeicher im Steuergerät zwischengespeichert werden, wird die Datenaufnahme nicht von der Geschwindigkeit des Datentransfers zwischen Diagnosegerät und Steuergerät begrenzt sondern nur noch vom internen Aufbau des Steuergeräts. Weiterhin wird der vom Diagnosegerät gesendete und empfangene Datenverkehr wesentlich verringert, so dass die verfügbare Datenrate zum Transport von Betriebsdaten genutzt werden kann und ein geringerer Anteil an Verwaltungsdaten als nach dem Stand der Technik übertragen werden muss.

Durch das erfindungsgemäße Verfahren kann die Geschwindigkeit der Datenaufnahme unabhängig von der Übertragungsgeschwindigkeit der Schnittstelle zwischen Steuergerät und Diagnosegerät gewählt werden und damit insbesondere auch höher sein. Durch die hohe Geschwindigkeit der Datenaufnahme ist es auch möglich, mehrere Typen von Betriebsdatenwerten, wie beispielhaft einen Lambdawert, einen Luftmengenwert und einen Abgastemperaturwert, parallel zu erfassen und so ein genaueres Bild des zeitlichen Verlaufs des Betriebszustands der Brennkraftmaschine zu erhalten. Es ist mit dem Verfahren eine Datenaufnahme mit 100 Einzeldaten pro Sekunde, auch für mehrere Typen von Betriebsdaten parallel, möglich, auch eine drehzahlsynchrone Datenaufnahme ist erreichbar. Diese Unabhängigkeit der Geschwindigkeit der Datenaufnahme von dem Datentransfer zwischen Steuergerät und Diagnosegerät hat weiterhin den Vorteil, das die Daten in genau vorgebbarem Zeittakt aufgenommen werden können; eine zeitliche Verschiebung durch Verzögerungen der Anfrage aus dem Diagnosegerät oder dem Sendezeitpunkt aus dem Steuergerät kann nicht auftreten. Es kann auch vorgesehen sein, dass der Zeittakt der Datenaufnahme im Steuergerät festgelegt wird um beispielhaft die drehzahlsynchrone Datenaufnahme zu erreichen. Eine Beeinflussung des Fahrbetriebs erfolgt nicht, da die Diagnosefunktion lediglich bei angeschlossenem Diagnosegerät aktiviert wird.

Eine gezielte Prüfung unterschiedlicher Betriebszustände, insbesondere auch zur Optimierung des Betriebsverhaltens der Brennkraftmaschine und zur Fehlersuche, wird ermöglicht, indem während der Aufnahme von Betriebsdaten gezielt Parameter der Brennkraftmaschine mittels des Diagnosegerätes vorgegeben werden. In einer Ausführungsform kann dabei vorgesehen sein, dass die Parameterumschaltung zeitlich mit der Aufnahme von Betriebsdaten synchronisiert wird. Es kann vorgesehen sein, dass während der Datenaufnahme Betriebsparameter der Brennkraftmaschine in einem vorgebbaren Bereich variiert werden. Die Optimierung und Fehlersuche wird durch die in weiten Grenzen frei wählbare Periode der Datenaufnahme erleichtert, die nicht gestört wird durch Senden und Empfangen von Daten. Es ist kann auch eine nicht periodische Datenaufnahme vorgesehen sein, die mittels Eingaben an dem Diagnosegerät spezifiziert wird. Vorteilhaft ist die durch das Verfahren höhere erzielbare Datenrate, die eine schnellere Fehlersuche und Optimierung erlaubt und durch die insbesondere Lastwechselvorgänge erst analysierbar werden.

Die Flexibilität der Aufnahme von Betriebsdaten der Brennkraftmaschine wird dadurch erhöht, dass der Beginn der Datenaufnahme auf unterschiedliche Weise festgelegt werden kann, indem die Diagnosefunktion vom Diagnosegerät gestartet wird oder indem vom Diagnosegerät ein Startzeitpunkt oder eine Verzögerungsdauer zwischen einem Startsignal aus dem Diagnosegerät und dem Startzeitpunkt der Diagnosefunktion an das Steuergerät übertragen werden. Die Diagnosefunktion kann auch so ausgelegt sein, dass von dem Diagnosegerät eine Startbedingung, wie beispielhaft die Über- oder Unterschreitung eines Wertes in dem Steuergerät, festgelegt werden kann.

Die Länge der Phase der Betriebsdatenaufnahme kann festgelegt werden, indem die Anzahl der aufzunehmenden Betriebsdaten vom Diagnosegerät an das Steuergerät übertragen wird, da diese zusammen mit der zeitlichen Auflösung der Datenerfassung die Gesamtdauer festlegt. Durch die Angabe der Anzahl der aufzunehmenden Daten kann weiterhin der im Steuergerät verfügbare Speicher optimal ausgenutzt werden und es kann auf eine Funktion verzichtet werden, die bei Erreichen der Grenze des verfügbaren Speicherbereichs die zu erst aufgenommenen Daten überschreibt ("rolling buffer"). Durch Wegfall des "rolling buffer" ist eine eindeutige zeitliche Zuordnung der Betriebsdaten in Bezug auf den Startzeitpunkt einer Messreihe möglich.

Eine hohe Geschwindigkeit bei der Datenaufnahme und eine Trennung von Datenaufnahme und Datenübertragung werden dadurch erzielt, dass die Betriebsdaten vom Steuergerät an das Diagnosegerät nach Abschluss der Aufnahme der Betriebsdaten übertragen werden. Durch diese Trennung können die Betriebsdaten mit der vorgesehenen Datenrate in den Pufferspeicher aufgenommen werden und anschließend als Block übertragen werden, wodurch die Übertragungsdauer vermindert wird. Der Beginn der Ausgabe der Betriebsdaten kann dabei auf einen Befehl des Diagnosegeräts oder automatisch nach Abschluss der Messung erfolgen. Es kann auch vorgesehen sein, dass die Datenübertragung beginnt, wenn der Pufferspeicher gefüllt ist.

Eine besonders effiziente Nutzung eines in dem Steuergerät vorhandenen Speichers sieht vor, dass in dem Speicher in dem Steuergerät Programmabläufe für Diagnosefunktionen gespeichert werden und dass in einem Teil des Speichers als Pufferspeicher Betriebsdaten aus Diagnosefunktionen gespeichert werden. In einem Werkstattbetrieb oder bei einer Optimierung der Brennkraftmaschine auf einem Prüfstand kann in dem Steuergerät vorhandener flüchtiger Speicher verwendet werden, der für Diagnosefunktionen vorgesehen ist; es ist dann kein zusätzlicher nichtflüchtiger Speicher zur Speicherung der Betriebsdaten erforderlich. Die erfindungsgemäße Lösung ist daher besonders einfach und kostengünstig umsetzbar.

Die die Vorrichtung betreffende Aufgabe wird gelöst, indem in dem Steuergerät ein Pufferspeicher zur Speicherung der Betriebsdaten vorgesehen ist und indem die Diagnosefunktion zur zeitlich hoch aufgelösten Aufnahme und Speicherung von Daten in dem Pufferspeicher ausgelegt ist. Die Diagnosefunktion kann hierbei als Schaltkreis und/oder Programmablauf in dem Steuergerät verwirklicht sein. Sie ermöglicht eine Trennung der Aufnahme der Betriebsdaten von deren Übertragung an das Diagnosegerät und hebt so zeitliche Begrenzungen der Datenaufnahme durch die Datenübertragungsgeschwindigkeit zwischen Steuergerät und Diagnosegerät auf. Erfindungsgemäß wird nicht jeder Wert von Betriebsdaten einzeln vom Diagnosegerät angefragt und übertragen sondern es wird eine Messreihe spezifiziert, deren Ergebnis als Block aus dem Steuergerät an das Diagnosegerät übertragen wird. Eingeschlossen ist hierbei die Möglichkeit, aus den Ausgangsdaten der der Brennkraftmaschine zugeordneten Sensoren durch Berechnungen Betriebsdaten zu erzeugen und aus Kombination von in dem Steuergerät vorhandenen Daten und Ausgangsdaten der Sensoren Betriebsdaten zu bestimmen.

Ist in dem Steuergerät ein Zeitgeber als Programmablauf oder Schaltkreis vorgesehen, kann die erfindungsgemäße Entkopplung von Datenaufnahme und Datenübertragung genutzt werden um die Daten in dem Steuergerät in einem vorgebbaren Zeittakt zu bestimmen und zu speichern. Der Zeitgeber kann programmierbar ausgelegt sein, so dass in dem Diagnosegerät der Zeittakt festgelegt und an den Zeitgeber im Steuergerät übertragen werden kann. Der Zeitgeber kann auch so ausgelegt sein, dass unterschiedliche Zeitfunktionen von dem Diagnosegerät an den Zeitgeber übertragen werden und von dem Zeitgeber abgearbeitet werden.

### Kurze Beschreibung der Zeichnung

Die Erfindung wird im Folgenden anhand eines in der Figur dargestellten Ausführungsbeispiels erläutert. Es zeigt:

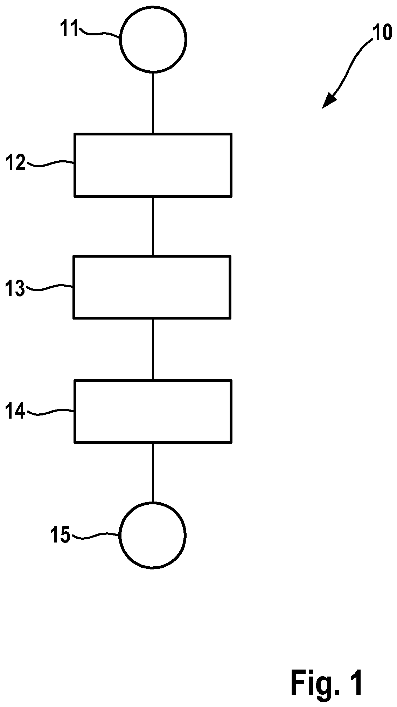

Figur 1 einen Ablaufplan zur Aufnahme von Betriebsdaten einer Brennkraftmaschine

Figur 1 zeigt einen Ablaufplan 10 zur Aufnahme von Betriebsdaten einer Brennkraftmaschine in einem Steuergerät der Brennkraftmaschine sowie zu deren Übertragung an ein Diagnosegerät. Nach einem Start 11 überträgt erfindungsgemäß ein externes Prüfgerät, ein so genannter Diagnosetester, in einer Datenspezifizierung 12 an das Steuergerät der Brennkraftmaschine eine Information, welcher Typ von Betriebsdaten der Brennkraftmaschine aufgenommen und gespeichert werden soll. Weiterhin überträgt das externe Prüfgerät in der Datenspezifizierung 12 die Information, in welchem zeitlichen Rhythmus die Daten aufgenommen werden sollen. In einer Datenaufzeichnung 13 nimmt das Steuergerät die Betriebsdaten auf und schreibt sie in einen Speicherbereich in dem Steuergerät. In einer Datenübertragung 14 werden die Betriebsdaten aus dem Speicherbereich in dem Steuergerät an das externe Diagnosegerät übertragen. Hier können die Betriebsdaten grafisch dargestellt und ausgewertet werden. Mit einem Ende 15 wird der erfindungsgemäße Ablauf abgeschlossen.

## Patentansprüche

1. Verfahren zur Aufnahme von Betriebsdaten einer Brennkraftmaschine in einem Steuergerät während einer Diagnosefunktion des Steuergeräts und zur Übertragung der Betriebsdaten von dem Steuergerät an ein Diagnosegerät, wobei die Betriebsdaten in dem Steuergerät mit Hilfe von der Brennkraftmaschine zugeordneten Sensoren und/oder aus von Ausgangssignalen der Sensoren abgeleiteten Größen und/oder aus Steuergeräte-internen Größen bestimmt werden, von dem Diagnosegerät an die Diagnosefunktion eine Angabe eines Betriebsdaten -Typs und einer zeitlichen Auflösung der Werteaufnahme übertragen wird, in dem Steuergerät mittels der Diagnosefunktion die Betriebsdaten erfasst werden, die Werteaufnahme von dem Diagnosegerät gestartet wird, die Betriebsdaten in einem Pufferspeicher in dem Steuergerät gespeichert werden und die Betriebsdaten aus dem Pufferspeicher an das Diagnosegerät übertragen werden, **dadurch gekennzeichnet, dass** während der Aufnahme von Betriebsdaten Parameter der Brennkraftmaschine mittels des Diagnosegerätes vorgegeben werden, wobei mehrere Typen von Betriebsdaten parallel erfasst werden.

2. Verfahren nach Anspruch 1, **dadurch gekennzeichnet, dass** eine Umschaltung von Parametern zeitlich mit der Aufnahme der Betriebsdaten synchronisiert wird.

3. Verfahren nach Anspruch 1 oder 2, **dadurch gekennzeichnet, dass** die Diagnosefunktion vom Diagnosegerät gestartet wird oder dass vom Diagnosegerät ein Startzeitpunkt oder eine Verzögerungsdauer zwischen einem Startsignal aus dem Diagnosegerät und dem Startzeitpunkt der Diagnosefunktion an das Steuergerät übertragen werden

4. Verfahren nach einem der Ansprüche 1 bis 3, **dadurch gekennzeichnet, dass** die Anzahl der aufzunehmenden Betriebsdaten vom Diagnosegerät an das Steuergerät übertragen wird.

5. Verfahren nach einem der Ansprüche 1 bis 4, **dadurch gekennzeichnet, dass** die Betriebsdaten vom Steuergerät an das Diagnosegerät nach Abschluss der Aufnahme der Betriebsdaten übertragen werden.

6. Verfahren nach einem der Ansprüche 1 bis 5, **dadurch gekennzeichnet, dass** in einem Speicher in dem Steuergerät Programmabläufe für Diagnosefunktionen gespeichert werden und dass in einem Teil des Speichers als Pufferspeicher Betriebsdaten aus Diagnosefunktionen gespeichert werden.

7. Vorrichtung zur Aufnahme von Betriebsdaten einer Brennkraftmaschine in einem zur Steuerung der Brennkraftmaschine vorgesehenen Steuergerät während einer Diagnosefunktion des Steuergeräts und zur Übertragung der Betriebsdaten von dem einen Speicher aufweisenden Steuergerät an ein mit dem Steuergerät verbundenes Diagnosegerät, wobei dem Steuergerät Sensoren zur Aufnahme der Betriebsdaten zugeordnet sind und/oder in dem Steuergerät Funktionen vorgesehen sind, die zur Ableitung von Betriebsdaten aus den Ausgangssignalen der Sensoren vorgesehen sind, wobei in dem Steuergerät eine Diagnosefunktion ein Pufferspeicher zur Speicherung der Betriebsdaten vorgesehen sind und wobei die Diagnosefunktion zur zeitlich hoch aufgelösten Aufnahme und Speicherung von Daten in dem Pufferspeicher ausgelegt ist,**dadurch gekennzeichnet, dass** in einem Teil des Speichers Programmabläufe für Diagnosefunktionen gespeichert sind, dass in dem Steuergerät ein Zeitgeber als rogrammablauf oder Schaltkreis vorgesehen ist, dass die Länge der Phase der Betriebsdatenaufnahme festlegbar ist und dass die Diagnosefunktion zur parallelen Erfassung mehrerer Typen von Betriebsdaten ausgebildet ist.

8. Vorrichtung nach Anspruch 7,**dadurch gekennzeichnet, dass** der Zeitgeber programmierbar ausgelegt ist und in dem Diagnosegerät ein Zeittakt festlegbar und an den Zeitgeber im Steuergerät übertragbar ist.

9. Vorrichtung nach Anspruch 7 oder 8, **dadurch gekennzeichnet, dass** unterschiedliche Zeitfunktionen von dem Diagnosegerät an den Zeitgeber im Steuergerät übertragbar und von dem Zeitgeber abarbeitbar sind.

## Claims

1. Method for receiving operational data of an internal combustion engine in a control device during a diagnostic function of the control device and for transmitting the operational data from the control device to a diagnostic device, wherein the operational data is determined in the control device using sensors assigned to the internal combustion engine and/or from variables derived from output signals of the sensors and/or from control-device-internal variables, the specification of an operational data type and a chronological resolution of the recording of values are transmitted from the diagnostic device to the diagnostic function, the operational data is registered in the control device by means of the diagnostic function, the recording of values is started by the diagnostic device, the operational data is stored in a buffer memory in the control device, and the operational data is transmitted from the buffer memory to the diagnostic device, **characterized in that** during the recording of operational data, parameters of the internal combustion engine are predefined by means of the diagnostic device, wherein a plurality of types of operational data are registered in parallel.

2. Method according to Claim 1, **characterized in that** switching over of parameters is synchronized chronologically with the recording of the operational data.

3. Method according to Claim 1 or 2, **characterized in that** the diagnostic function is started by the diagnostic device, or **in that** a starting point or a deceleration period between a starting signal from the diagnostic device and the starting time of the diagnostic function are transmitted from the diagnostic device to the control device.

4. Method according to one of Claims 1 to 3, **characterized in that** the number of operational data items to be recorded is transmitted from the diagnostic device to the control device.

5. Method according to one of Claims 1 to 4, **characterized in that** the operational data is transmitted from the control device to the diagnostic device after the termination of the recording of the operational data.

6. Method according to one of Claims 1 to 5, **characterized in that** program sequences for diagnostic functions are stored in a memory in the control device, and **in that** operational data from diagnostic functions are stored in a part of the memory as a buffer memory.

7. Device for recording operational data of an internal combustion engine in a control device which is provided for controlling the internal combustion engine, during a diagnostic function of the control device, and for transmitting the operational data from a control device which has a memory to a diagnostic device which is connected to the control device, wherein sensors for recording the operational data are assigned to the control device and/or functions which are provided for deriving operational data from the output signals of the sensors are provided in the control device, wherein a diagnostic function a buffer memory for storing the operational data are provided in the control device and wherein the diagnostic function is configured for recording and storing data in the buffer memory with high chronological resolution, **characterized in that** program sequences for diagnostic functions are stored in a part of the memory, **in that** a timer is provided as a program sequence or circuit in the control device, **in that** the length of the phase of the recording of the operational data can be defined, and **in that** the diagnostic function is designed for the parallel registering of a plurality of types of operational data.

8. Device according to Claim 7, **characterized in that** the timer is of programmable design, and a timing clock can be defined in the diagnostic device and transmitted to the timer in the control device.

9. Device according to Claim 7 or 8, **characterized in that** different time functions can be transmitted from the diagnostic device to the timer in the control device and can be processed by the timer.

## Revendications

1. Procédé pour l'acquisition de données de fonctionnement d'un moteur à combustion interne dans un appareil de commande pendant une fonction de diagnostic de l'appareil de commande et pour la transmission des données de fonctionnement de l'appareil de commande à un appareil de diagnostic, dans lequel les données de fonctionnement sont déterminées dans l'appareil de commande à l'aide de capteurs associés au moteur à combustion interne et/ou de grandeurs déduites à partir de signaux de sortie des capteurs et/ou de grandeurs internes à l'appareil de commande, en ce qu'une indication du type des données de fonctionnement et d'un déclenchement dans le temps de l'acquisition de valeurs est transmise par l'appareil de diagnostic à la fonction de diagnostic, les données de fonctionnement sont détectées dans l'appareil de commande au moyen de la fonction de diagnostic, l'acquisition de valeurs est déclenchée par l'appareil de diagnostic, les données de fonctionnement sont stockées dans une mémoire tampon dans l'appareil de commande et les données de fonctionnement sont transmises de la mémoire tampon à l'appareil de diagnostic, **caractérisé en ce que**, pendant l'acquisition de données de fonctionnement, des paramètres du moteur à combustion interne sont prédéterminés au moyen de l'appareil de commande, dans lequel plusieurs types de données de fonctionnement sont détectés en parallèle.

2. Procédé selon la revendication 1, **caractérisé en ce qu'**un changement de paramètres est synchronisé dans le temps avec l'acquisition des données de fonctionnement.

3. Procédé selon la revendication 1 ou 2, **caractérisé en ce que** la fonction de diagnostic est déclenchée par l'appareil de commande ou **en ce qu'**un instant de déclenchement ou une durée de retard entre un signal de déclenchement provenant de l'appareil de diagnostic et l'instant de déclenchement de la fonction de diagnostic est transmis à l'appareil de commande par l'appareil de diagnostic.

4. Procédé selon l'une quelconque des revendications 1 à 3, **caractérisé en ce que** le nombre des données de fonctionnement devant être acquises est transmis par l'appareil de diagnostic à l'appareil de commande.

5. Procédé selon l'une quelconque des revendications 1 à 4, **caractérisé en ce que** les données de fonctionnement sont transmises par l'appareil de commande à l'appareil de diagnostic après l'achèvement de l'acquisition des données de fonctionnement.

6. Procédé selon l'une quelconque des revendications 1 à 5, **caractérisé en ce que** les séquences de programmes destinées à des fonctions de diagnostic sont stockées dans une mémoire dans l'appareil de commande et **en ce que** des données de fonctionnement provenant de fonctions de diagnostic sont stockées dans une partie de la mémoire jouant le rôle de mémoire tampon.

7. Dispositif destiné à acquérir des données de fonctionnement d'un moteur à combustion interne dans un appareil de commande prévu pour commander le moteur à combustion interne pendant une fonction de diagnostic de l'appareil de commande et à transmettre les données de fonctionnement de l'appareil de commande comportant une mémoire à un appareil de diagnostic connecté à l'appareil de commande, dans lequel des capteurs destinés à acquérir les données de fonctionnement sont associés à l'appareil de commande et/ou il est prévu dans l'appareil de commande des fonctions qui sont prévues pour déduire des données de fonctionnement à partir des signaux de sortie des capteurs, dans lequel il est prévu dans l'appareil de commande une fonction de diagnostic une mémoire tampon destinée à stocker les données de fonctionnement et dans lequel la fonction de diagnostic est conçue pour l'acquisition et le stockage à haute résolution temporelle de données dans la mémoire tampon, **caractérisé en ce que** des séquences de programmes destinées à des fonctions de diagnostic sont stockées dans une partie de la mémoire, **en ce qu'**il est prévu dans l'appareil de commande un temporisateur en tant que séquence de programme ou que circuit, **en ce que** la longueur de la phase d'acquisition de données de fonctionnement peut être mise en oeuvre et **en ce que** la fonction de diagnostic est réalisée pour détecter en parallèle plusieurs types de données de fonctionnement.

8. Dispositif selon la revendication 7, **caractérisé en ce que** le temporisateur est conçu de manière à être programmable et **en ce qu'**un rythme peut être fixé dans l'appareil de diagnostic et peut être transmis au temporisateur de l'appareil de commande.

9. Dispositif selon la revendication 7 ou 8, **caractérisé en ce que** des fonctions temporelles différentes peuvent être transmises par l'appareil de diagnostic au temporisateur de l'appareil de commande et peuvent être traitées par le temporisateur.
